(19) Europäisches Patentamt
European Patent Office
Office européen des brevets

(11) EP 1 765 737 B1

(12) EUROPEAN PATENT SPECIFICATION

(45) Date of publication and mention
of the grant of the patent:
**02.03.2011 Bulletin 2011/09**

(51) Int Cl.:
***C03B 17/06*** (2006.01)

(21) Application number: **05779611.2**

(22) Date of filing: **26.05.2005**

(86) International application number:
**PCT/US2005/018909**

(87) International publication number:
**WO 2005/121182 (22.12.2005 Gazette 2005/51)**

(54) **GLASS SHEET FORMING APPARATUS**

GERÄT ZUR HERSTELLUNG VON GLASSCHEIBEN

APPAREIL POUR FORMER UNE FEUILLE DE VERRE

(84) Designated Contracting States:
**DE FR**

(30) Priority: **02.06.2004 US 859248**

(43) Date of publication of application:
**28.03.2007 Bulletin 2007/13**

(73) Proprietor: **Corning Incorporated**
**Corning NY 14831 (US)**

(72) Inventors:
• **RHOADS, Randy L**
**Horseheads, New York 14845 (US)**
• **ADAMOWICZ, John A**
**Corning, New York 14830 (US)**

• **BORATAV, Olus N**
**Ithaca, New York 14850 (US)**

(74) Representative: **Anderson, James Edward George**
**Elkington and Fife LLP**
**Prospect House**
**8 Pembroke Road**
**Sevenoaks, Kent TN13 1XR (GB)**

(56) References cited:
**US-A1- 2001 039 814     US-A1- 2003 110 804**

• **PATENT ABSTRACTS OF JAPAN vol. 1997, no. 08, 29 August 1997 (1997-08-29) -& JP 09 110443 A (NIPPON ELECTRIC GLASS CO LTD), 28 April 1997 (1997-04-28)**

**Description**

**BACKGROUND OF THE INVENTION**

Field of the Invention

The present invention relates to a forming apparatus (e.g., isopipe) that is used in a glass manufacturing system to form a glass sheet.

Description of Related Art

Corning Inc. has developed a process known as the fusion process (e.g., downdraw process) to form high quality thin glass sheets that can be used in a variety of devices like flat panel displays. The fusion process is the preferred technique for producing glass sheets used in flat panel displays because this process produces glass sheets whose surfaces have superior flatness and smoothness compared to glass sheets produced by other methods. The fusion process is described in U.S. Patent Nos. 3,338,696 and 3, 682, 609.

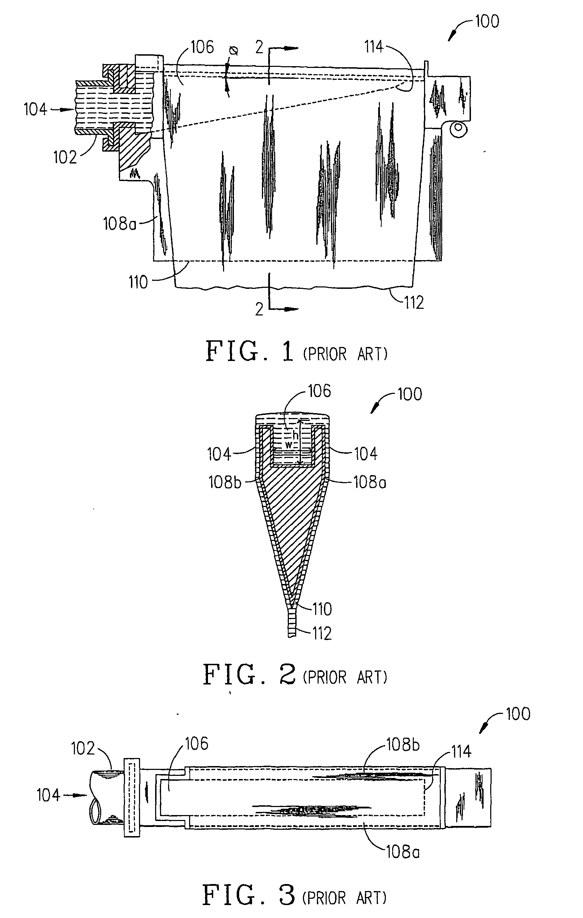

The fusion process makes use of a specially shaped refractory block referred to as an isopipe (e.g., forming apparatus) over which molten glass flows down both sides and meets at the bottom to form a single glass sheet. As shown in FIGURES 1-3, the traditional forming apparatus 100 includes an inlet 102 that receives molten glass 104 which flows into a trough 106 (e.g., weir 106) and then overflows and runs down two sides 108a and 108b before fusing together at what is known as a root 110. The root 110 is where the two sides 108a and 108b come together and where the two overflow walls of molten glass 104 rejoin before being drawn downward and cooled to form a glass sheet 112.

In the traditional forming apparatus 100, the flowing molten glass 104 overflows the trough 106 and flows down sides 108a and 108b and gets thinner in the region near the root 110 due to the force of gravity and the force of the pulling rolls (not shown) which draw the molten glass 104 to produce the desired glass sheet 112. The height and width of a cross section of the trough 106 that the molten glass 104 moves through can be obtained after determining the desired mass distribution and flow rate of molten glass 104 at each cross section of the trough 106. This flow rate expression which is generally described in U.S. Patent No. 3,338,696 is given by:

$$ Q = \frac{\rho\, g \tan \phi}{3\, \mu}\, w^4\, \alpha^3 \left[ 1 - \frac{3}{8} \sum_{n=0}^{\infty} \frac{\alpha}{\beta_n^5} \quad \tanh\left( \beta_n\, /\, \alpha \right) \right] $$

where

Q = the flow rate at any cross section of the trough 106.
w = the channel width of the trough 106.
$\alpha$ = the aspect ratio--height over width of the trough 106.
$\beta_n$ = a variable given by $(2n + 1)/\, \pi/4$.
$\rho$ = density of the molten glass 104.
$\mu$ = viscosity of the molten glass 104.
$\phi$= angle between a horizontal plane and the parallel upper surfaces on the trough 106.
g = gravity 980 cm/sec$^2$.

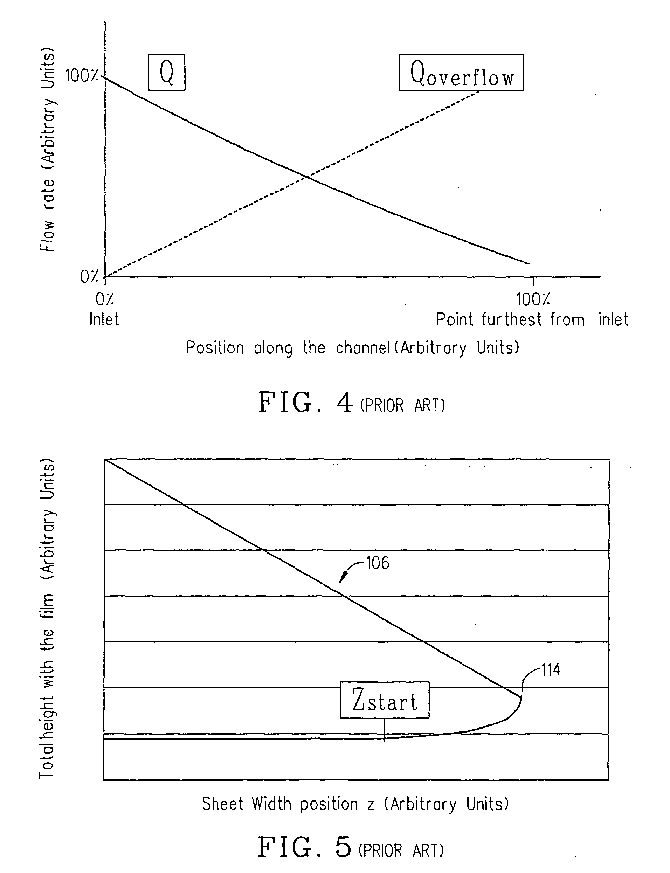

The amount of flow rate Q of molten glass 104 that is prescribed at each cross section of the trough 106 is determined after determining a desired target mass distribution of molten glass 104 which is specified as a design criteria. The amount of reduction of this quantity of molten glass 104 along the trough 106, denoted by dQ/dz determines the corresponding channel geometry of the trough 106 where the channel height and width in the trough 106 are a function of channel position z. The change dQ/dz is mainly due as a result of the overflowing flow of molten glass 104 that leaves the trough 106. In particular, the amount of the mass of flowing molten glass 104 that decreases in the trough 106 is equal to the amount of the mass of the flowing molten glass 104 that overflows the trough 106 (see FIGURE 4). As can also be seen in FIGURE 4, at an end 114 furthest from the inlet 102 of the trough 106, there is no longer any molten glass 104 in the trough 106. It should be appreciated that the overflow mass of molten glass 104 at by the time it reaches end 114 is equal to the mass of molten glass 104 that entered the inlet 102 of the trough 106.

A typical shape of the trough 106 that the above algorithm determines is presented in FIGURE 5. As can be seen, the mathematically contoured channel heights of the trough 106 which are a function of the channel flow position z lead to a steep decrease in the height as the compression end 114 of the trough 106 is approached. In fact, there is a broad range of flow conditions that always lead to the contour shape of the trough 106 that has a very steep decrease at the compression end of the trough 106 as shown in FIGURE 5. Although the traditional forming apparatus 100 generally works well to form the glass sheet 112 it does have some drawbacks. Namely, it can be difficult to manufacture the sharp decreasing height contour in the trough 106 (see FIGURE 5). Accordingly, there is a need for a new forming apparatus that addresses the aforementioned shortcomings and other shortcomings of the traditional forming apparatus 100. These needs and other needs are satisfied by the forming apparatus of the present invention.

## BRIEF DESCRIPTION OF THE INVENTION

The invention provides a forming apparatus according to claim 1, a glass manufacturing system according to claim 7, and use of the apparatus or system according to claims 9 and 10. The preamble of claim 1 is known from US 2001 03814.

The forming apparatus of the present invention includes a body having an inlet that receives molten glass which flows into a trough formed in the body and then overflows two top surfaces of the trough and runs down two sides of the body before fusing together where the two sides come together to form a glass sheet. In particular, the trough has a bottom surface where the height between the bottom surface and the top surfaces of the trough varies in a predetermined manner as the bottom surface extends away from the inlet. The trough also has an embedded object formed on the bottom surface where both the bottom surface and embedded object are sized to cause a desired mass distribution of the molten glass to overflow the top surfaces of the trough to facilitate the production of the glass sheet.

## BRIEF DESCRIPTION OF THE DRAWINGS

A more complete understanding of the present invention may be had by reference to the following detailed description when taken in conjunction with the accompanying drawings wherein:

FIGURE 1 (PRIOR ART) is a side elevational view, partly in section, of a traditional forming apparatus;
FIGURE 2 (PRIOR ART) is a cross-sectional side view of the traditional forming apparatus shown in FIGURE 1;
FIGURE 3 (PRIOR ART) is a top view of the traditional forming apparatus shown in FIGURE 1;
FIGURE 4 (PRIOR ART) is a graph illustrating a flow rate of molten glass vs. a position along a trough in the traditional forming apparatus shown in FIGURE 1;
FIGURE 5 (PRIOR ART) is a graph illustrating the contour of a typical trough in the traditional forming apparatus shown in FIGURE 1;
FIGURE 6 is a block diagram illustrating an exemplary glass manufacturing system including a forming apparatus in accordance with the present invention;
FIGURE 7 is a perspective view of an exemplary forming apparatus that can be used in the glass manufacturing system shown in FIGURE 6.
FIGURE 8 is a side elevational view, partly in section, of the forming apparatus shown in FIGURE 7;
FIGURE 9 is a cross-sectional side view of the forming apparatus shown in FIGURE 7;
FIGURE 10 is a top view of the forming apparatus shown in FIGURE 7;
FIGURE 11 is a perspective view of the embedded object located within a trough of the forming apparatus shown in FIGURE 7;
FIGURE 12 is a graph illustrating the contour of a trough having an embedded object in the forming apparatus shown in FIGURE 7;
FIGURES 13A-13D are diagrams illustrating cross-sectional shapes of exemplary embedded objects that could be placed in the trough of the forming apparatus shown in FIGURE 7;
FIGURE 14A is a side view of an exemplary embedded object which is located in the trough of a forming apparatus that in addition to helping regulate the flow of molten glass in the trough can also direct the flow of molten glass away from a channel symmetry axis in the trough in accordance with one aspect of the present invention; and
FIGURE 14B is a side view of an exemplary embedded object which is located in the trough of a forming apparatus that in addition to helping regulate the flow of molten glass in the trough can also direct the flow of molten glass away from a channel symmetry axis in the trough in accordance with another aspect of the present invention.

## DETAILED DESCRIPTION OF THE DRAWINGS

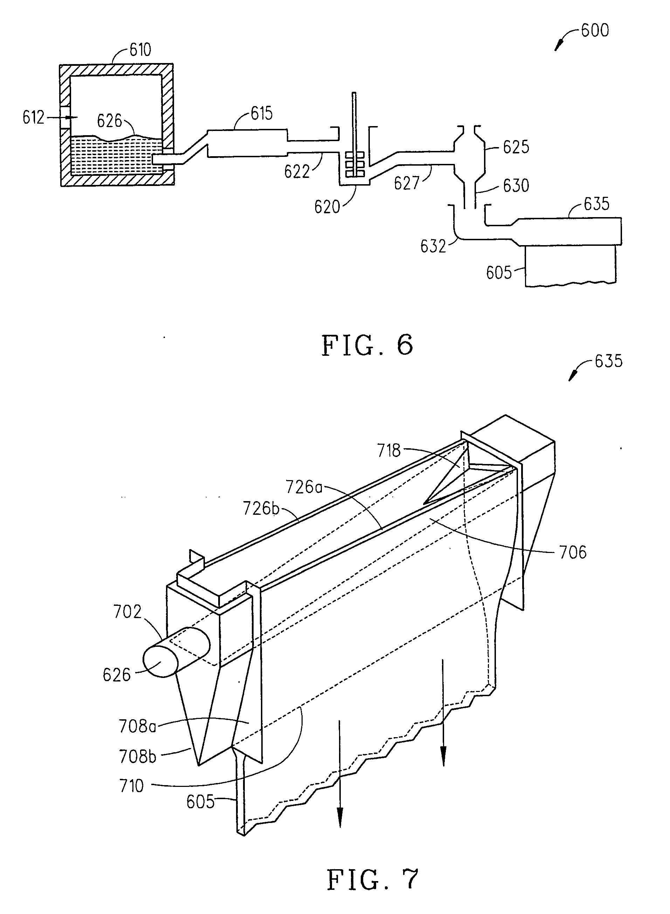

Referring to FIGURE 6, there is shown a schematic view of an exemplary glass manufacturing system 600 that uses the downdraw fusion process to make a glass sheet 605. The glass manufacturing system 600 includes a melting vessel 610, a fining vessel 615, a mixing vessel 620 (e.g., stir chamber 620), a delivery vessel 625 (e.g., bowl 625) and a forming apparatus 635 (e.g., isopipe 635). The melting vessel 610 is where the glass batch materials are introduced as shown by arrow 612 and melted to form molten glass 626. The fining vessel 615 (e.g., finer tube 615) receives the molten glass 626 (not shown at this point) from the melting vessel 610 and removes bubbles from the molten glass 626. The fining vessel 615 is connected to the mixing vessel 620 (e.g., stir chamber 620) by a finer to stir chamber connecting tube 622. The mixing vessel 620 is connected to the delivery vessel 625 by a stir chamber to bowl connecting tube 627. The delivery vessel 625 delivers the molten glass 626 through a downcomer 630 to an inlet 632 and into the forming apparatus 635 (e.g., isopipe 635) which forms the glass sheet 605. Different embodiments of the forming apparatus 635 (e.g., isopipe 635) are shown in greater detail below with respect to FIGURES 7-14.

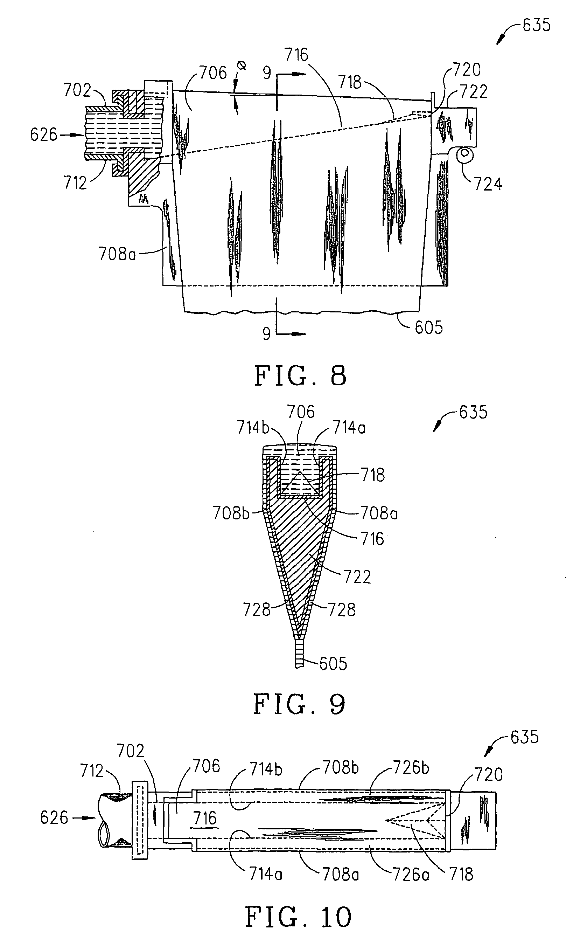

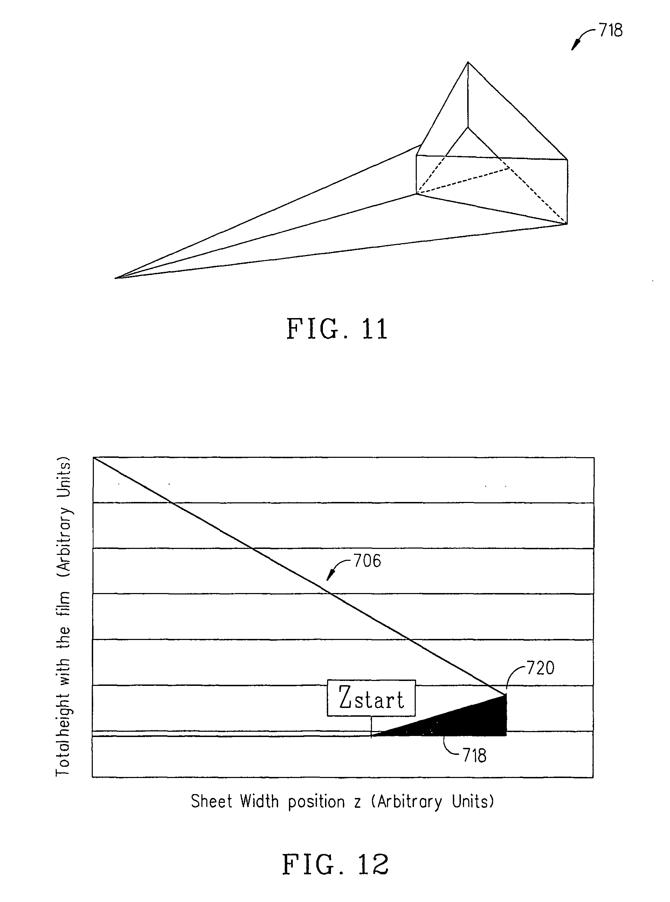

Referring to FIGURES 7-11, there are shown different views of an exemplary forming apparatus 635 that can be used in the glass manufacturing system 600. The forming apparatus 635 includes an inlet 702 that receives the molten glass 626 which flows into a trough 706 that includes an embedded object 718 (see FIGURE 11) formed therein and then overflows and runs down two sides 708a and 708b before fusing together at what is known as a root 710. The root 710 is where the two sides 708a and 708b come together and where the two overflow walls of molten glass 626, rejoin before being drawn downward and cooled to form glass sheet 605. The forming apparatus 635 is a marked improvement over the traditional forming apparatus 100 because the presence of the embedded object 718 makes it easier to manufacture the new trough 706 when compared to the difficulties associated with the manufacturing of the sharp decreasing height contour in the trough 106 of the traditional forming apparatus 100. A more detailed discussion about some exemplary types, shapes and other advantages of the embedded object 718 is provided below with respect to FIGURES 8-14.

In the preferred embodiment, the forming apparatus 635 includes a feed pipe 712 that provides molten glass 626 through an aperture or inlet 702 to the trough 706. The trough 706 is bounded by interior side-walls 714a and 714b that are shown to have a substantially perpendicular relationship but could have any type of relationship to a contoured bottom surface 716 and embedded object 718 (e.g., embedded plow 718) that form the bottom of the trough 706. The molten glass 626 has a low effective head as it flows into the accurately contoured upwardly open trough 706 which precisely meters the flow of the molten glass 626 to enable production of the glass sheet 605 which has a constant or uniform desired cross section along its width.

The contoured bottom surface 716 and embedded object 718 have a mathematically described pattern that becomes shallow at end 720 which is the end the farthest from the inlet 702. As shown in this embodiment, the height between the bottom surface 716 and the top surfaces 726a and 726b of the trough 706 decreases as one moves away from the inlet 702 towards end 720. However in other embodiments, the height can vary in any manner between the bottom surface 716 and top surfaces 726a and 726b. In any embodiment, the trough 706 is contoured and designed to cause a desired thickness of the molten glass 626 to overflow the top surfaces 726a and 726b of the trough 706 to enable the production of the glass sheet 605.

The forming apparatus 635 shown has a cuneiform/wedge shaped body 722 with oppositely disposed converging side-walls 708a and 708b. The trough 706 having the bottom surface 716 and embedded object 718 is longitudinally located on the upper surface of the wedge-shaped body 722. The body 722 may be pivotally adjusted by a device such as an adjustable roller, wedge, cam 724 or other device to provide a desired tilt angle $\phi$ which is the angular variation from the horizontal of the parallel upper edges or surfaces 726a and 726b on side-walls 708a and 708b (see FIGURES 7 and 9).

In operation, molten glass 626 enters the trough 706 through the feed pipe 712 and inlet 702. Then the molten glass 626 wells over the parallel upper surfaces 726a and 726b of the trough 706, divides, and flows down each side of the oppositely disposed converging sidewalls 708a and 708b of the wedge-shaped body 722. At the bottom of the wedge portion the divided molten glass 626 rejoins to form a single glass sheet 605 that has very flat and smooth surfaces. The high surface quality results from a free surface 728 of molten glass 626 dividing and flowing down the oppositely disposed converging side-walls 708a and 708b and forming the exterior surface of the glass sheet 605 without having this portion of the molten glass 626 having to come in contact with the outside of the forming apparatus 635.

The trough 706 has the bottom surface 716 and embedded object 718 that can be empirically sized by physical modeling or mathematical modeling to ensure that a desired mass distribution of molten glass 626 flows over the side-walls 708a and 708b. One way to size the trough 706 is to size it such that it can deliver the same mass distribution of molten glass 626 over the upper surfaces 726a and 726b as is done by the traditional forming apparatus 100 which has a trough 106 with a steep end but no embedded body (compare FIGURES 5 and 11). As shown in FIGURE 11, the forming apparatus 635 has an embedded object 718 which starts at a location denoted by Zstart. In order to enable the traditional forming apparatus 100 and the new forming apparatus 635 to perform the same they need to have the same mass distribution and flow rate Q. To obtain the same flow rate Q one needs to examine the aforementioned flow solution:

$$Q = \frac{\rho\,g\tan\phi}{3\,\mu}\,w^4\,\alpha^3 \left[ 1 - \frac{3}{8} \sum_{n=0}^{\infty} \frac{\alpha}{\beta_n^5} \tanh(\beta_n/\alpha) \right]$$

where

Q = the flow rate at any cross section of the trough 106.
w = the channel width of the trough 106.
$\alpha$ = the aspect ratio--height over width of the trough 106.
$\beta_n$ = a variable given by (2n + 1)/ $\pi$/4.
$\rho$ = density of the molten glass 104.
$\mu$ = viscosity of the molten glass 104.
$\phi$ = angle between a horizontal plane and the parallel upper surfaces on the trough 106.
g = gravity 980 cm/sec$^2$.

Referring to the forming apparatus 635, when $\beta_n$ = (2n+1) $\pi$/4 then the bracketed term approaches unity at the compression end 720 of the trough 706. This is true because: the end section 720 of the trough 706 where the embedded object 718 is placed corresponds to locations in the trough 706 where the channel height is very small compared to channel width resulting in very low values of the aspect ratio $\alpha$. Moreover, this is true because: the tanh term in the series is bounded by unity and the series has a very-fast converging structure with small corrections from high order terms. All this amounts to the fact that the second term in the bracket is small compared to unity and it is the prefactor $\rho$ g tan $\phi$ w$^4$ $\alpha^3$/3$\mu$ that is the leading contribution to the channel flow rate Q.
Now take a traditional flowing apparatus 100 and a new flowing apparatus 635 that have similar flow properties (e.g., same $\rho$ and $\mu$) and an identical inclined slope at the inlets 102 and 702 of the troughs 106 and 706 (e.g., g tan $\phi$ is the same in both apparatuses 100 and 635). For the two apparatuses 100 and 635 to have equivalent flow rates Q, the necessary condition then requires:

$$w^4\,\alpha^3 = cons\tan t$$

The above equality can be written for traditional forming apparatus 100 (system A) and new forming apparatus 635 (system B) as:

$$(w^4\,\alpha^3)_A = (w^4\,\alpha^3)_B$$

A more useful expansion can be obtained by:

$$w^4\,\alpha^3 = W^4\,\frac{H^3}{W^3} = (W\,H)\,H^2 = A_c\,H^2$$

where Ac is the net flow area in the traditional and new apparatuses 100 and 635. The height H expressed above can be computed in two different ways.
In the first way, one can determine H using the following expression:

$$H = \frac{A_c}{W}$$

where W is an equivalent width when there is an embedded object 718 in the trough 706. Following is a recommended expression for W as a function of channel position:

$$W(z) = W_{start}\left(1 - \frac{W_{plow}(z)}{W_{start}}\right)$$

where the subscript "start" corresponds to the channel position where the embedded object 718 starts (see FIGURE 11).

In the second way to determine H, one can perform the following steps:

1) Determine the flow area $A_c$ at a given location.
2) Assume W is constant at every location.
3) Find the local $H = A_c/W$.

The above results indicate that when $w^4\alpha^3$ is kept the same between the traditional flowing apparatus 100 and the new flowing apparatus 635, then there is a range of geometries the embedded object 718 can have that would produce the same flow rate effects as the traditional forming apparatus 100.

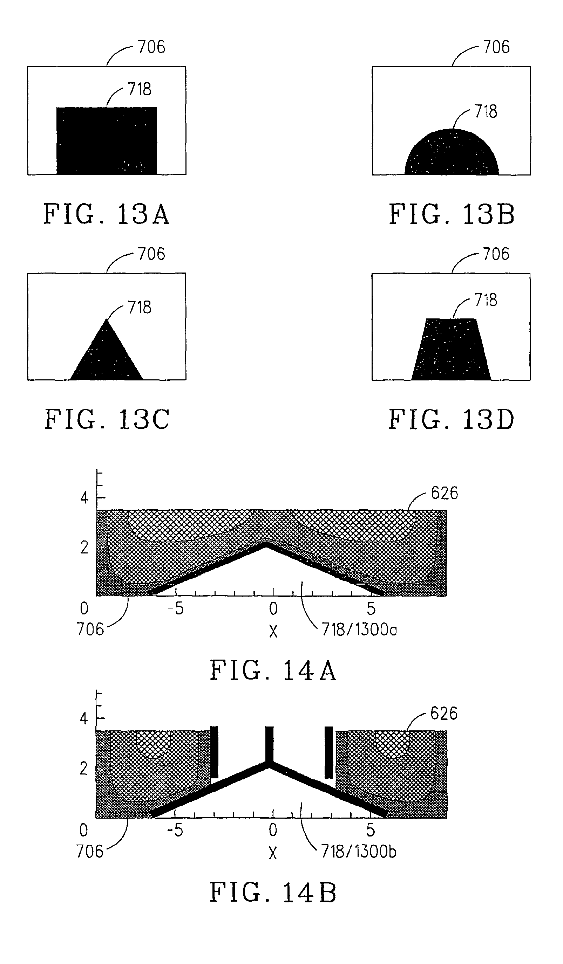

It should be appreciated that in addition to the embedded object 718 shown in FIGURES 7-12 that has the shape of a plow with three intersecting triangular surfaces, the embedded object 718 can have a wide range of shapes and configurations some of which are shown in FIGURES 13A-13D. For instance, the embedded object 718 can be a diverging rectangular cross-sectional shaped embedded object (see FIGURE 13A), a semi-elliptical/circular cross-sectional shaped embedded object (see FIGURE 13B), a triangular cross-sectional shaped embedded object (see FIGURE 14C) and a trapezoidal cross-sectional shaped embedded object (see FIGURE 13D). In fact, the embedded object 718 can be any type of object that has a diverging cross-sectional shape.

Another advantage associated with the forming apparatus 635 is that the embedded object 718 can be used to change the delivered mass distribution of molten glass 626 from the trough 706 if there is a need to change the target mass flow requirement. For instance, in the case when the trough 706 is unable to deliver the desired target mass profile of molten glass 626 that could arise due to several factors such as off-design operating conditions, compositional changes, channel wear-off in time, the use of a properly sized embedded object 718 could help address this problem.

In FIGURES 14A and 14B, the influence that two embedded objects 1300a and 1300b which have different geometries have on the flow distribution of molten glass 626 is presented. As shown in FIGURES 14A and 14B, in addition to regulating the amount of flow of molten glass 626 the embedded objects 1300a and 1300b can also serve the purpose of directing the flow of molten glass 626 away from the channel symmetry axis of the trough 706.

Following are some additional features, advantages and uses of the forming apparatus 635 of the present invention:

• The forming apparatus 635 is preferably made from a zircon refractory material that has an appropriate creep resistance property so it does not sag or sags very little when forming the glass sheet 605.

• The forming apparatus 635 and the glass manufacturing system 100 can have different configurations and components other than those shown in FIGURES 6 and 7 and still be considered within the scope of the present invention.

• It should be appreciated that the net effect of reducing the channel cross section of the trough 706 by using the embedded object 718 is that the embedded object functions as a flow regulator wherein the size and the shape of the embedded object controls the desired distribution of flow of the forming apparatus 635.

• The forming apparatus 635 in addition to forming a glass sheet 605 can be used to form any type of thermoplastic sheet material.

• The preferred glass sheets 605 made using the forming apparatus 635 are aluminosilicate glass sheets, borosilicate glass sheets or boro-alumino silicate glass sheets.

• The forming apparatus 635 is particularly useful for forming high strain point glass substrates like the ones used in flat panel displays. Moreover, the forming apparatus 635 could aid in the manufacturing of other types of glass sheets.

**Claims**

1. A forming apparatus comprising:

   a body having two sides (708a, 708b) and having a trough (706) formed therein with two top surfaces (726a, 726b), said body further having an inlet (702) for receiving molten glass (626) which flows into the trough (706) and then overflows the two top surfaces (726a, 726b) of the trough (706) and runs down the two sides (708a, 708b) of said body before fusing together where the two sides come together to form a glass sheet (605), wherein said trough (706) has a bottom surface (716), and
   wherein the forming apparatus is **characterised in that** said trough (706) is provided with an embedded object (718) formed on the bottom surface, the bottom surface (716) and the embedded object (718) being both sized for causing a desired mass distribution of the molten glass (626) to overflow the top surfaces (726a, 726b) of said trough (706) to facilitate production of said glass sheet (605).

2. The forming apparatus of claim 1, wherein said embedded object (718) is located near an end of said trough (706) which is opposite the inlet (702) to said trough.

3. The forming apparatus of claim 1, wherein said trough (706) including the bottom surface (716) and the embedded object (718) have geometries determined by using physical modeling.

4. The forming apparatus of claim 1, wherein said trough (706) including the bottom surface (716) and the embedded object (718) have geometries determined by using mathematical modeling.

5. The forming apparatus of claim 1, wherein said embedded object (718) is an object that has a diverging cross-sectional shape.

6. The forming apparatus of claim 1, wherein said embedded object (718) is arranged to direct the molten glass away from a channel symmetry axis in said trough (706).

7. A glass manufacturing system comprising:

   at least one vessel for melting batch materials; and
   the forming apparatus of claim 1 for receiving the melted batch materials and forming a glass sheet.

8. The glass manufacturing system of claim 7, wherein said at least one vessel includes a melting, fining, mixing or delivery vessel (610, 615, 620, 625).

9. Use of the glass manufacturing system of claim 7 or 8 for forming a glass sheet.

10. Use of the forming apparatus of any of claims 1 to 6 for forming a glass sheet.

**Patentansprüche**

1. Formvorrichtung, aufweisend:

   einen Körper, welcher zwei Seiten (708a, 708b) und eine Rinne (706), welche in dem Körper ausgebildet ist, mit zwei oberen Oberflächen (726a, 726b) aufweist, wobei der Körper ferner einen Einlass (702) zum Aufnehmen von geschmolzenem Glas (626) aufweist, welches in die Rinne (706) fließt und dann die zwei oberen Oberflächen (726a, 726b) der Rinne (706) überfließt und die zwei Seiten (708a, 708b) des Körpers herunter fließt, bevor es zusammenschmilzt, wo die zwei Seiten zusammenkommen, um eine Glasscheibe (605) auszubilden, wobei die Rinne (706) eine untere Oberfläche (716) aufweist,
und
wobei die Formvorrichtung **dadurch gekennzeichnet ist, dass** die Rinne (706) mit einem eingebetteten Gegenstand (718) versehen ist, welcher auf der unteren Oberfläche ausgebildet ist, wobei die untere Oberfläche (716) und der eingebettete Gegenstand (718) jeweils zum Bewirken einer gewünschten Massenverteilung des geschmolzenen Glases (626) dimensioniert sind, um die oberen Oberflächen (726a, 726b) der Rinne (706) zu überfließen, um die Herstellung der Glasscheibe (605) zu vereinfachen.

**2.** Formvorrichtung nach Anspruch 1,
wobei der eingebettete Gegenstand (718) in der Nähe eines Endes der Rinne (706) angeordnet ist, welches gegenüber dem Einlass (702) ist.

**3.** Formvorrichtung nach Anspruch 1,
wobei die Rinne (706), welche die untere Oberfläche (716) und den eingebetteten Gegenstand (718) aufweist, Geometrien aufweist, die durch die Verwendung von physikalischer Modellierung bestimmt wurden.

**4.** Formvorrichtung nach Anspruch 1,
wobei die Rinne (706), welche die untere Oberfläche (716) und den eingebetteten Gegenstand (718) aufweist, Geometrien aufweist, die durch die Verwendung von mathematischer Modellierung bestimmt wurden.

**5.** Formvorrichtung nach Anspruch 1,
wobei der eingebettete Gegenstand (718) ein Gegenstand ist, welcher eine divergierende Querschnittsform aufweist.

**6.** Formvorrichtung nach Anspruch 1,
wobei der eingebettete Gegenstand (718) angeordnet ist, um das geschmolzene Glas weg von einer Symmetrieachse des Kanals in der Rinne (706) zu leiten.

**7.** Glasherstellungssystem, aufweisend:

zumindest einen Behälter zum Schmelzen von Chargenmaterial; und
die Formvorrichtung nach Anspruch 1 zum Aufnehmen des geschmolzenen Chargenmaterials und zum Bilden einer Glasscheibe.

**8.** Glasherstellungssystem nach Anspruch 7,
wobei der zumindest eine Behälter einen Schmelzbehälter, Läuterungsbehälter, Mischbehälter oder Ausgabebehälter (610, 615, 620, 625) aufweist.

**9.** Verwendung eines Glassherstellungssystems nach Anspruch 7 oder 8 zum Bilden einer Glasscheibe.

**10.** Verwendung der Formvorrichtung nach irgendeinem der Ansprüche 1-6 zum Bilden einer Glasscheibe.


**Revendications**

**1.** Appareil de formage comprenant :

un corps ayant deux côtés (708a, 708b) et ayant une goulotte (706) formée à l'intérieur avec deux surfaces supérieures (726a, 726b), ledit corps ayant en outre une entrée (702) pour recevoir du verre fondu (626) qui s'écoule dans la goulotte (706) et déborde ensuite des deux surfaces supérieures (726a, 726b) de la goulotte (706) et s'écoule vers le bas des deux côtés (708a, 708b) dudit corps avant s'unifier l'endroit où les deux côtés se rejoignent pour former une feuille de verre (605), où ladite goulotte (706) possède une surface de fond (716), et où l'appareil de formage est **caractérisé en ce que** ladite goulotte (706) est munie d'un objet encastré (718) formé sur la surface de fond, la surface de fond (716) et l'objet encastré (718) étant tous les deux dimensionnés de manière à amener une distribution de masse souhaitée du verre fondu (626) à déborder des surfaces supérieures (726a, 726b) de ladite goulotte (706) pour faciliter la production de ladite feuille de verre (105).

**2.** Appareil de formage selon la revendication 1, dans lequel ledit objet encastré (718) est situé à proximité d'une extrémité de ladite goulotte (706) qui est opposée à l'entrée (702) de ladite goulotte.

**3.** Appareil de formage selon la revendication 1, dans lequel ladite goulotte (706) y compris la surface de fond (716) et l'objet encastré (718) ont des géométries déterminées en utilisant une modélisation physique.

**4.** Appareil de formage selon la revendication 1, dans lequel ladite goulotte (706) y compris la surface de fond (716) et l'objet encastré (718) ont des géométries déterminées en utilisant une modélisation mathématique.

**5.** Appareil de formage selon la revendication 1, dans lequel ledit objet encastré (718) est un objet dont la coupe transversale a une forme divergente.

**6.** Appareil de formage selon la revendication 1, dans lequel ledit objet encastré (718) est agencé pour diriger le verre fondu à distance d'un axe de symétrie de canal dans ladite goulotte (706).

**7.** Système de fabrication de verre comprenant :

au moins un récipient pour faire fondre des matières premières ; et
l'appareil de formage selon la revendication 1 pour recevoir les matières premières fondues et former une feuille de verre.

**8.** Système de fabrication de verre selon la revendication 7, dans lequel ledit au moins un récipient comprend un récipient de fusion, d'affinage, de mélange ou de distribution (610, 615, 620, 625).

**9.** Utilisation du système de fabrication de verre selon la revendication 7 ou 8 pour former une feuille de verre.

**10.** Utilisation de l'appareil de formage selon l'une quelconque des revendications 1 à 6 pour former une feuille de verre.

FIG. 1 (PRIOR ART)

FIG. 2 (PRIOR ART)

FIG. 3 (PRIOR ART)

FIG. 4 (PRIOR ART)

FIG. 5 (PRIOR ART)

610

612

626

615

622

620

627

625

630

632

635

605

600

# FIG. 6

635

718

726a

726b

706

702

626

708a

708b

710

605

# FIG. 7

FIG. 8

FIG. 9

FIG. 10

FIG. 11

FIG. 12

FIG. 13A

FIG. 13B

FIG. 13C

FIG. 13D

FIG. 14A

FIG. 14B

EP 1 765 737 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3338696 A
- US 3682609 A

- US 200103814 B

16